(19) **Europäisches Patentamt European Patent Office Office européen des brevets**

(11) **EP 1 405 038 B1**

(12) **FASCICULE DE BREVET EUROPEEN**

(45) Date de publication et mention de la délivrance du brevet:
**05.08.2009 Bulletin 2009/32**

(51) Int Cl.:
***G01C 5/00*** *(2006.01)* ***G06T 15/50*** *(2006.01)*
***G09B 29/00*** *(2006.01)* ***G08G 5/04*** *(2006.01)*

(21) Numéro de dépôt: **02748929.3**

(22) Date de dépôt: **04.06.2002**

(86) Numéro de dépôt international:
**PCT/FR2002/001897**

(87) Numéro de publication internationale:
**WO 2003/002941 (09.01.2003 Gazette 2003/02)**

(54) **PROCEDE DE SYNTHESE D'UNE IMAGE ALTIMETRIQUE**

HÖHENBILDSYNTHESEVERFAHREN

METHOD FOR GENERATION OF A RELIEF IMAGE

(84) Etats contractants désignés:
**DE ES FR GB IT**

(30) Priorité: **29.06.2001 FR 0108672**

(43) Date de publication de la demande:
**07.04.2004 Bulletin 2004/15**

(73) Titulaire: **Thales**
**75008 Paris (FR)**

(72) Inventeurs:
• **JARDIN, Laurent,**
**Thales Intellectual Property**
**F-94117 Arcueil Cedex (FR)**

• **VERBEQUE, Jean-René,**
**Thales Intellectual Property**
**F-94117 Arcueil Cedex (FR)**
• **COPPOLINO, Erick,**
**Thales Intellectual Property**
**F-94117 Arcueil Cedex (FR)**

(74) Mandataire: **Esselin, Sophie**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 773 609**          **US-A- 6 076 042**

**Description**

L'invention concerne le domaine des procédés de synthèse d'une image altimétrique constituée de pixels et représentant en couleur un terrain survolé par un aéronef. Le terrain survolé par l'aéronef est, soit le terrain effectivement survolé par l'aéronef lorsque l'image est affichée, soit le terrain qui est destiné à être survolé par l'aéronef, l'image étant alors affichée par anticipation. Le procédé de synthèse d'une image altimétrique est préférentiellement réalisé par certains blocs fonctionnels d'une fonction cartographique d'une carte accélérateur cartographique décrite en détail ultérieurement. Un tel procédé est connu du document FR2773609.

Le procédé de synthèse de l'image altimétrique comporte préférentiellement plusieurs modes dont un mode anticollision normal. Dans le mode anticollision normal, la couleur représentant le terrain dépend en chaque pixel au moins à la fois, de la différence d'altitude entre l'aéronef et le terrain se traduisant soit par une information de danger de collision entre l'aéronef et le terrain soit par une information de proximité entre l'altitude de l'aéronef et l'altitude du terrain, et d'une éventuelle information de présence d'au moins une zone d'intervisibilité entre l'aéronef et une menace potentielle donnée. Une information de risque de danger de collision, lorsqu'elle existe, pourra alors être interprétée, soit comme une information de danger de collision dans certains cas, soit de préférence ici comme une information de proximité. Une éventuelle information de présence d'une zone de forêt peut également être disponible, mais elle est alors inhibée, car elle n'est pas affichée lorsque le type de mode anticollision est sélectionné.

En un certain nombre de pixels de l'image altimétrique, plusieurs types d'information vont entrer en compétition. Les afficher toutes rendrait l'image assez illisible pour le pilote, ce qui la rendrait inutile. L'objectif de l'invention réside dans une hiérarchisation pertinente des dites informations réalisée par un choix particulier de l'ordre des priorités affectées aux différents types d'information et dans le fait de ne garder en chaque pixel que le type d'information le plus prioritaire ce qui implique d'effacer les autres types d'information et de perdre une partie du contenu informatif global qui aurait pu être véhiculé par l'image altimétrique. De préférence, cet ordre des priorités n'est strictement respecté que pour des pixels n'appartenant pas aux contours d'une zone d'intervisibilité, car pour les pixels appartenant aux contours d'une zone d'intervisibilité, qui sont tout de même la minorité parmi les pixels de l'image altimétrique, des opérations de lissage desdits contours, afin d'éviter des clignotements, vient perturber ledit ordre des priorités. Avantageusement, l'opération de lissage est réalisée pour tous les pixels appartenant aux contours seulement de l'ensemble des zones d'intervisibilité, car un contour d'une zone d'intervisibilité inclus dans l'intérieur d'une autre zone d'intervisibilité n'a en fait pas besoin d'être lissé.

Selon l'invention, il est prévu un procédé de synthèse d'une image altimétrique constituée de pixels et représentant en couleur un terrain survolé par un aéronef, comportant au moins un mode anticollision normal dans lequel la couleur représentant le terrain dépend en chaque pixel au moins à la fois, de la différence d'altitude entre l'aéronef et le terrain se traduisant soit par une information de danger de collision entre l'aéronef et le terrain soit par une information de proximité entre l'altitude de l'aéronef et l'altitude du terrain, et d'une éventuelle information de présence d'au moins une zone d'intervisibilité entre l'aéronef et une menace potentielle donnée, caractérisé en ce que l'ordre décroissant des priorités entre informations est le suivant, d'abord l'information de danger de collision, puis l'information de présence d'au moins une zone d'intervisibilité, ensuite l'information de proximité, en ce qu'en chaque pixel n'étant pas situé au niveau des contours d'une zone d'intervisibilité, seule l'information existante la plus prioritaire est retenue pour la constitution de l'image altimétrique, et en ce qu'en chaque pixel, la couleur de l'image altimétrique peut être modulée par une information d'ombrage représentative du relief du terrain en ledit pixel.

De préférence, pour faciliter une perception rapide par le pilote de son environnement sans nécessiter d'analyse préalable de sa part, l'information de danger de collision et l'information de présence d'au moins une zone d'intervisibilité sont respectivement représentées par deux teintes distinctes entre elles d'une seule et même couleur. Avantageusement, l'information de danger de collision est représentée par une teinte plutôt vive de la couleur et l'information de présence d'au moins une zone d'intervisibilité est représentée par une teinte plutôt pastel de la couleur. Ainsi, par exemple une même couleur rouge est associée à la fois à une information de danger de collision et à une information de présence d'au moins une zone d'intervisibilité entre l'aéronef et une menace potentielle, donnée ou non. Dans les deux cas précédents, cela permet au pilote d'identifier instantanément les endroits de la carte recouverts de rouge comme des endroits dangereux pour lui et pour l'aéronef qu'il pilote. Ensuite, très rapidement après, mais dans un second temps, le rouge vif, qui frappe plus son regard, lui montre les endroits à éviter de manière absolue, en effet une rencontre entre l'aéronef et une montagne résultera nécessairement en un accident, tandis que le rouge pastel, qui attire moins l'attention, lui montre des endroits dangereux certes, mais desquels il est possible de se sortir indemne, en effet, en passant dans la zone d'intervisibilité d'une batterie de missiles sol-air, le pilote prend un risque important, mais son aéronef n'est pas voué à une destruction certaine, il ne lui est pas impossible d'échapper aux missiles.

De manière préférentielle, la couleur représentant le terrain dépend également d'une éventuelle information de présence d'au moins une zone de portée d'une menace potentielle donnée, l'ordre décroissant des priorités devient alors le suivant, d'abord l'information de danger de collision, puis l'information de présence d'au moins une zone d'intervisibilité, ensuite l'information de présence d'au moins une zone de portée, enfin l'information de proximité. L'information de présence d'au moins une zone de portée et l'information de présence d'au moins une zone d'intervisibilité sont préférentiellement représentées par une même teinte de deux couleurs distinctes entre elles. Par exemple, le pastel est associé aux informations ayant trait aux menaces, que ce soit pour indiquer une zone d'intervisibilité ou une zone de portée. Ainsi, le code des couleurs acquiert une cohérence interne accrue, ce qui ne peut qu'aider le pilote à mieux mémoriser le code des couleurs et ainsi à être plus opérationnel.

De préférence, le procédé de synthèse de l'image altimétrique comporte également, en plus du mode anticollision normal, un mode hypsométrique normal utilisant en plus, en chaque pixel, une éventuelle information de présence d'une zone de forêt. Dans ce mode hypsométrique normal, la couleur représentant le terrain dépend donc en chaque pixel au moins à la fois, de l'altitude du terrain se traduisant par une information d'altitude du terrain, d'une éventuelle information de présence d'une zone de forêt et d'une éventuelle information de présence d'au moins une zone d'intervisibilité entre l'aéronef et une menace potentielle donnée. L'ordre décroissant des priorités entre informations devient alors le suivant, d'abord l'information de présence d'au moins une zone d'intervisibilité, puis l'information de présence de forêt, ensuite l'information d'altitude. En chaque pixel n'étant situé ni au niveau des contours d'une zone d'intervisibilité ni au niveau des contours d'une zone de forêt, seule l'information existante la plus prioritaire est retenue pour la constitution de l'image altimétrique. En chaque pixel, la couleur de l'image altimétrique peut être modulée par une information d'ombrage représentative du relief du terrain en ledit pixel. Les raisons d'exclusion des pixels appartenant à des contours, soit de zone d'intervisibilité, soit de zone de forêt, de l'application stricte de l'ordre des priorités précédemment décrit, sont similaires à celles mentionnées pour le mode anticollision normal. De façon similaire également, et pour les mêmes raisons que pour le mode anticollision normal, une opération de lissage est réalisée pour tous les pixels appartenant aux contours de l'ensemble des zones d'intervisibilité et pour tous les pixels appartenant aux contours de l'ensemble des zones de forêt.

L'invention sera mieux comprise et d'autres particularités et avantages apparaîtront à l'aide de la description ci-après et des dessins joints, donnés à titre d'exemples, où :

- la figure 1 représente schématiquement un premier exemple de système cartographique dans lequel s'intègre la carte accélérateur cartographique qui met en oeuvre le procédé selon l'invention ;
- la figure 2 représente schématiquement un deuxième exemple de système cartographique dans lequel s'intègre la carte accélérateur cartographique qui met en oeuvre le procédé selon l'invention ;
- la figure 3 représente schématiquement l'ensemble des blocs fonctionnels de la fonction cartographique de la carte accélérateur cartographique, ainsi que leurs relations entre eux, parmi lesquels blocs se trouvent les blocs fonctionnels mis en oeuvre par le procédé selon l'invention ;
- la figure 4 représente schématiquement les positions relatives et les altitudes d'un pixel courant et de pixels situés autour du pixel courant ;
- la figure 5 représente schématiquement un exemple d'affichage sur écran, de l'ensemble constitué par une image cartographique profile verticale et une image cartographique 2D5, par la fonction cartographique de la carte accélérateur cartographique mettant en oeuvre le procédé selon l'invention ;
- la figure 6 représente schématiquement un exemple d'affichage sur écran, de l'ensemble constitué par une image cartographique profile horizontale et une image cartographique 2D5, par la fonction cartographique de la carte accélérateur cartographique mettant en oeuvre le procédé selon l'invention.

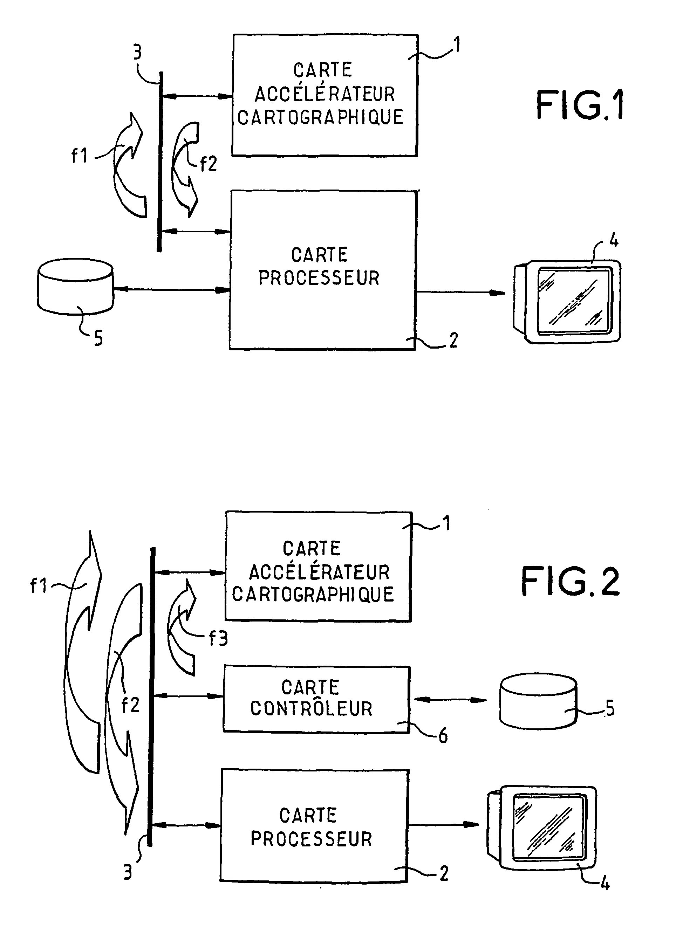

La figure 1 représente schématiquement un premier exemple de système cartographique dans lequel s'intègre la carte accélérateur cartographique qui met en oeuvre le procédé selon l'invention. Le système cartographique comporte une carte 1 accélérateur cartographique, une carte 2 processeur, un bus 3, un écran 4 d'affichage, une base 5 de données cartographiques. Le bus 3 est de préférence un bus PCI. La carte 2 processeur extrait des données cartographiques de la base 5 de données cartographiques pour les regrouper avec des paramètres du vol de l'aéronef et des paramètres de l'interface homme machine et les mettre sur le bus 3 dans un flot f1 de données. La carte 1 accélérateur cartographique lit les données du flot f1 qui circulent sur le bus 3. La carte 1 accélérateur cartographique utilise les données du flot f1 prises sur le bus 3 pour réaliser la synthèse d'une image cartographique. La carte 1 accélérateur cartographique envoie sur le bus 3 l'image cartographique dans un flot f2 de données. La carte 2 processeur lit sur le bus 3 l'image cartographique du flot f2 pour l'envoyer à l'écran 4 d'affichage. L'écran 4 d'affichage affiche l'image cartographique qui peut ainsi être visualisée par le pilote de l'aéronef par exemple.

La figure 2 représente schématiquement un deuxième exemple de système cartographique dans lequel s'intègre la carte accélérateur cartographique qui met en oeuvre le procédé selon l'invention. Le système cartographique comporte une carte 1 accélérateur cartographique, une carte 2 processeur, un bus 3, un écran 4 d'affichage, une base 5 de données cartographiques, une carte 6 contrôleur. Le bus 3 est de préférence un bus PCI. La carte 6 contrôleur extrait des données cartographiques de la base 5 de données cartographiques pour les mettre sur le bus 3 dans un flot f3 de données. La carte 2 processeur regroupe des paramètres du vol de l'aéronef et des paramètres de l'interface homme machine pour les mettre sur le bus 3 dans un flot f1 de données. La carte 1 accélérateur cartographique lit les

**EP 1 405 038 B1**

données du flot f1 et les données du flot f3 qui circulent sur le bus 3. La carte 1 accélérateur cartographique utilise les données du flot f1 et les données du flot du f3 prises sur le bus 3 pour réaliser la synthèse d'une image cartographique. La carte 1 accélérateur cartographique envoie sur le bus 3 l'image cartographique dans un flot f2 de données. La carte 2 processeur lit sur le bus 3 l'image cartographique du flot f2 pour l'envoyer à l'écran 4 d'affichage. L'écran 4 d'affichage affiche l'image cartographique qui peut ainsi être visualisée par le pilote de l'aéronef par exemple.

La carte accélérateur cartographique réalise à la fois une fonction de gestion et une fonction cartographique.

La fonction de gestion comporte une tâche de réception des données cartographiques de la base 5 de données cartographiques sous forme compressée par le bus 3, une tâche de décompression desdites données cartographiques, une tâche de stockage desdites données cartographiques dans une mémoire de terrain, une tâche de calcul des paramètres du vol de l'aéronef et de gestion des paramètres en provenance de l'interface homme machine, une tâche de transmission desdits paramètres à la fonction cartographique, une tâche de fourniture des données stockées dans la mémoire de terrain à la fonction cartographique, une tâche de réception de l'image cartographique générée par la fonction cartographique, une tâche de stockage de l'image cartographique dans une mémoire cible, une tâche de transmission de ladite image cartographique par le bus à la carte processeur.

La fonction cartographique comporte une tâche de séparation des données cartographiques issues de la mémoire de terrain en données d'altitude, en éventuelles informations présence d'une zone de forêt pour les pixels concernés, en éventuelles informations de présence d'au moins une zone d'intervisibilité pour les pixels concernés, en éventuelles informations de planimétrie pour les pixels concernés, une tâche d'interpolation des données et informations au pixel courant produisant notamment une image planimétrique en couleur, une tâche de traitement des données d'altitude par un algorithme d'ombrage afin de générer en chaque pixel un coefficient d'ombrage correspondant à la luminance que présente l'image cartographique avec un modèle d'éclairement donné, une autre tâche de traitement, exécutée en parallèle de la précédente, des données d'altitude afin de générer une image coloration hypsométrique ou anticollision, une tâche de synthèse d'une image altimétrique en couleur par combinaison, en chaque pixel de l'image altimétrique, de la coloration hypsométrique ou anticollision avec d'une part l'information éventuelle de présence d'une zone de forêt et d'autre part l'information éventuelle de présence d'au moins une zone d'intervisibilité, une tâche de modulation, en chaque pixel, par le coefficient d'ombrage soit de l'image altimétrique soit de l'image planimétrique, une tâche de mélange des deux images altimétrique et planimétrique, l'une d'entre elles étant modulée par le coefficient d'ombrage et l'autre non, afin de générer une image cartographique. Avantageusement, la fonction cartographique permet la synthèse d'une image cartographique de profil représentant le terrain en coupe et pouvant être affichée soit horizontalement soit verticalement. La fonction cartographique est de préférence réalisée à l'aide d'un EPLD, de quatre piles d'attente de type FIFO (provenant de la terminologie anglo-saxonne « first in first out ») et d'une palette de couleurs.

La fonction cartographique comporte plusieurs types de mode de fonctionnement, parmi lesquels d'une part les types de mode hypsométrique et les types de mode anticollision, d'autre part les types de mode normal et les types de mode inversé. Un mode particulier s'obtient par croisement de types de mode compatibles entre eux. Les modes particuliers ainsi obtenus sont donc le mode anticollision normal, le mode hypsométrique normal, le mode anticollision inversé, le mode hypsométrique inversé.

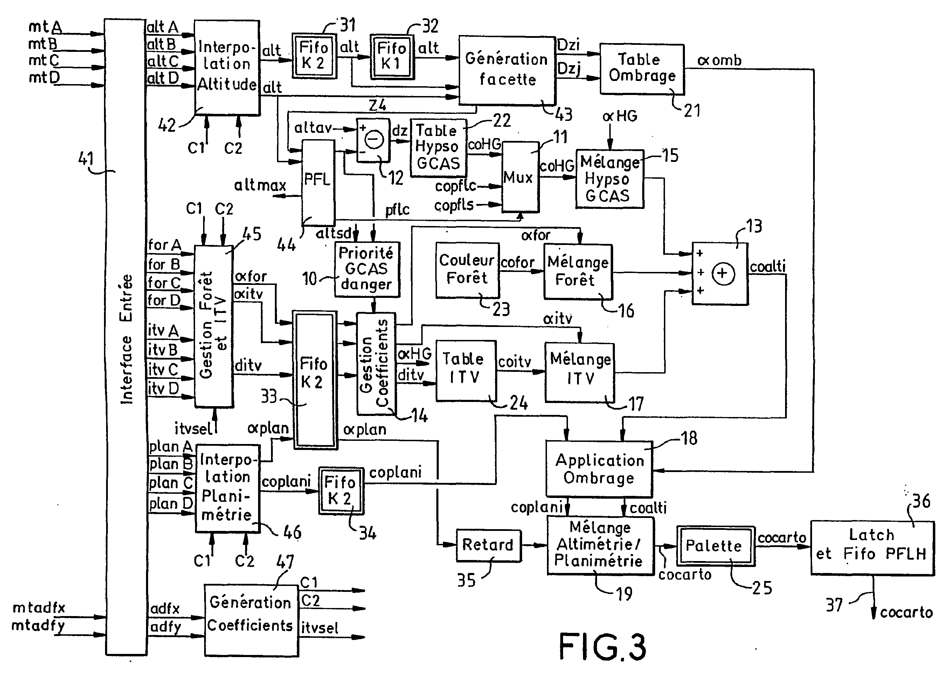

La figure 3 représente schématiquement l'ensemble des blocs fonctionnels de la fonction cartographique de la carte accélérateur cartographique, ainsi que leurs relations entre eux, parmi lesquels blocs se trouvent les blocs fonctionnels mis en oeuvre par le procédé selon l'invention. Les blocs fonctionnels réalisés par l'EPLD sont entourés d'un cadre simple tandis que les piles d'attente et la palette qui sont des composants structurellement distincts de l'EPLD sont entourés par un cadre double.

La tâche de séparation des données cartographiques issues de la mémoire de terrain en données d'altitude, en éventuelles informations de présence d'une zone de forêt pour les pixels concernés, en éventuelles informations de présence d'au moins une zone d'intervisibilité pour les pixels concernés, en éventuelles informations de planimétrie pour les pixels concernés, est réalisée par un bloc 41 interface d'entrée.

La tâche d'interpolation des données et informations au pixel courant P est réalisée par un bloc 42 d'interpolation d'altitude, un bloc 45 de gestion de la forêt et de l'intervisibilité (l'intervisibilité est représentée sur la figure 3 par le sigle ITV pour des raisons d'encombrement sur la figure 3) et un bloc 46 d'interpolation de planimétrie.

La tâche de traitement des données d'altitude par un algorithme d'ombrage afin de générer en chaque pixel un coefficient d'ombrage correspondant à la luminance de l'image cartographique avec un modèle d'éclairement donné, est réalisée par le bloc 43 de génération de facette et par la table 21 d'ombrage. Cet algorithme d'ombrage permet l'affichage simultané des macroreliefs et des microreliefs du terrain survolé par l'aéronef. Les macroreliefs correspondent à la disposition générale du relief du terrain survolé par l'aéronef. Les microreliefs correspondent à des différences de relief nettement plus faibles, par exemple une dizaine de mètres, mais suffisantes pour pouvoir abriter des menaces potentielles comme par exemple un système de missiles sol-air ou un hélicoptère ennemi. Cet affichage simultané des macroreliefs et des microreliefs est particulièrement intéressant dans le cas où l'aéronef dans lequel le système cartographique contenant la carte accélérateur cartographique est implémenté est un hélicoptère militaire.

La tâche de traitement des données d'altitude afin de générer une image coloration hypsométrique ou anticol-

4

lision, est réalisée par un soustracteur 12, une table 22 hypsométrique ou anticollision, un multiplexeur 11 et un bloc 15 de mélange hypsométrique ou anticollision. La tâche de traitement des éventuelles informations de présence d'une zone de forêt, afin de générer une image forêt, est réalisée par un registre 23 de couleur de forêt et un bloc 16 de mélange forêt. La tâche de traitement des éventuelles informations de présence d'au moins une zone d'intervisibilité directe ou indirecte avec au moins une menace potentielle donnée ou non, une menace potentielle donnée signifiant une menace potentielle connue et renseignée dans la base de données, afin de générer une image d'intervisibilité, est réalisée par une table 24 d'intervisibilité et un bloc 17 de mélange intervisibilité.

La tâche de synthèse d'une image altimétrique en couleur par combinaison, en chaque pixel de l'image altimétrique, de la coloration hypsométrique ou anticollision avec d'une part l'information éventuelle de présence d'une zone de forêt et d'autre part l'information éventuelle de présence d'au moins une zone d'intervisibilité, c'est-à-dire la combinaison pixel par pixel de l'image coloration hypsométrique ou anticollision, de l'éventuelle image forêt et de l'éventuelle image intervisibilité, est réalisée par le bloc 14 gestion des coefficients, le bloc 10 priorité à l'anticollision danger et l'additionneur 13.

La tâche de modulation, en chaque pixel, par le coefficient d'ombrage soit de l'image altimétrique soit de l'image planimétrique, est réalisée par le bloc 18 d'application d'ombrage. La tâche de mélange des deux images altimétrique et planimétrique, l'une d'entre elles étant modulée par le coefficient d'ombrage et l'autre non, afin de générer une image cartographique, est réalisée par le bloc 19 de mélange altimétrie/planimétrie.

L'option consistant en la réalisation d'une synthèse d'une image cartographique de profil représentant le terrain en coupe et pouvant être affichée soit horizontalement soit verticalement, requiert l'utilisation du bloc 44 profile (PFL étant l'abréviation de « profile » sur la figure 3) et du bloc 36 « Latch & FIFO PFLH ».

Le rendu colorimétrique voulu de l'image cartographique est assurée par la palette 25 laquelle est de préférence une SRAM. Une partie des différentes fonctions de retard nécessaire à l'exécution des différentes tâches de la fonction cartographique est assurée par quatre piles d'attente 31 à 34 et par un bloc retard 35. Le calcul des coefficients d'interpolation utilisés par les blocs 42, 45 et 46, est réalisé par le bloc 47 de génération des coefficients d'interpolation.

Chacun des différents blocs fonctionnels de la fonction cartographique représenté par un cadre sur la figure 3 va maintenant être décrit en détail, dans son mode d'implémentation préférentiel. Chacun desdits blocs fonctionnels reçoit, pour chaque pixel de l'image cartographique à générer, ledit pixel étant appelé pixel courant, en provenance de l'extérieur de la fonction cartographique, d'un ou de plusieurs autres blocs fonctionnels de la fonction cartographique, un ensemble de paramètres d'entrée et émet, en direction de l'extérieur de la fonction cartographique, d'un ou de plusieurs autres blocs fonctionnels de la fonction cartographique, un ensemble de paramètres de sortie. Les paramètres de contrôle permettant un fonctionnement correct et adapté des différents blocs fonctionnels ne sont pas décrits dans la suite du texte, sauf cas particulier, pour des raisons de clarté, de simplicité, et de concision. Ces paramètres de contrôle sont pour la plupart classiques.

Le bloc 41 interface d'entrée reçoit en provenance de l'extérieur de la fonction cartographique, ici en provenance de la mémoire de terrain associée à la fonction gestion de la carte accélérateur cartographique, les paramètres d'entrée mtA, mtB, mtC, mtD, mtadfx et mtadfy. Les paramètres d'entrée mtA, mtB, mtC et mtD, contiennent différentes données et informations concernant respectivement les points A, B, C et D. Les paramètres d'entrée mtA, mtB, mtC et mtD, sont codés sur 16 bits et envoyés vers le bloc 41 interface d'entrée à une fréquence de 64 MHz. Les points A, B, C et D sont les points correspondant aux pixels de la mémoire terrain qui sont les plus proches du point P de la mémoire cible lequel point P correspond au pixel courant de l'image cartographique à générer. Le point P est issu des quatre points A, B, C et D par une transformation classique qui n'est pas l'objet de la présente demande de brevet et qui ne sera donc pas décrite avec plus de détail. Le quadruplet des points A, B, C et D est associé au point P et chaque pixel courant est donc associé à un quadruplet « courant » différent des autres. Les opérations réalisées sur les points A, B, C et D, comme par exemple les opérations d'interpolation, doivent être réalisées pour chaque pixel courant, c'est-à-dire pour chacun des pixels de l'image considérée. Les paramètres d'entrée mtadfx et mtadfy contiennent des parties fractionnaires des adresses d'accès à la mémoire de terrain qui représentent respectivement les coordonnées cartésiennes du point P dans la portion de plan définie par les points A, B, C et D.

A partir des paramètres d'entrée mtA, mtB, mtC et mtD, le bloc 41 interface d'entrée extrait les paramètres de sortie altA, altB, altC et altD qui sont les altitudes respectives des points A, B, C et D, et les envoie vers le bloc 42 d'interpolation d'altitude. Les paramètres de sortie altA, altB, altC et altD sont codés sur 10 bits et envoyés vers le bloc 42 d'interpolation d'altitude à une fréquence de 16MHz.

Egalement à partir des paramètres d'entrée mtA, mtB, mtC et mtD, le bloc 41 interface d'entrée extrait les paramètres de sortie forA, forB, forC et forD qui contiennent chacun éventuellement une information de présence d'une zone de forêt respectivement pour les points A, B, C et D, c'est-à-dire qui contiennent une information de présence d'une zone de forêt pour les points correspondant à des portions de terrain effectivement recouvertes de forêt, et les envoie vers le bloc 45 de gestion de forêt et d'intervisibilité. Les paramètres de sortie forA, forB, forC et forD sont codés sur 1 seul bit, l'une des valeurs du bit véhiculant une information de présence d'une zone de forêt et l'autre valeur du bit correspondant à une absence de zone de forêt, et envoyés vers le bloc 45 de gestion de forêt et d'intervisibilité à une fréquence de 16MHz. Dans la détermination ultérieure de priorités entre différentes informations, seule la valeur du bit véhiculant une information de présence d'une zone de forêt est prise en compte, la valeur du bit correspondant à une absence de zone de forêt étant considérée comme une absence d'information de présence d'une zone de forêt laquelle information est alors considérée comme étant inexistante, l'information de priorité immédiatement inférieure à l'information de présence d'une zone de forêt pouvant alors être prise en compte à condition bien sûr qu'il n'existe pas d'autre information de priorité supérieure à la priorité d'une information de présence d'une zone de forêt.

Encore à partir des paramètres d'entrée mtA, mtB, mtC et mtD, le bloc 41 interface d'entrée extrait les paramètres de sortie itvA, itvB, itvC et itvD qui contiennent chacun éventuellement une information de présence d'au moins une zone d'intervisibilité directe ou indirecte entre l'aéronef et une menace potentielle éventuellement donnée c'est-à-dire connue, respectivement pour les points A, B, C et D, c'est-à-dire qui contiennent une information de présence d'au moins une zone d'intervisibilité pour les points correspondant à des portions de terrain présentant effectivement une intervisibilité avec au moins une menace, et les envoie vers le bloc 45 de gestion de forêt et d'intervisibilité. Les paramètres de sortie itvA, itvB, itvC et itvD sont codés sur 5 bits et envoyés vers le bloc 45 de gestion de forêt et d'intervisibilité à une fréquence de 16MHz. De même que pour l'information de présence d'une zone de forêt, dans la détermination ultérieure de priorités entre différentes informations, seules les combinaisons de valeurs des bits véhiculant une information de présence d'au moins une zone d'intervisibilité sont prises en compte, les combinaisons de valeurs des bit correspondant à une absence de zone d'intervisibilité étant considérée comme une absence d'information de présence d'au moins une zone d'intervisibilité laquelle information est alors considérée comme étant inexistante, l'information de priorité immédiatement inférieure à l'information de présence d'au moins une zone d'intervisibilité pouvant alors être prise en compte à condition bien sûr qu'il n'existe pas d'autre information de priorité supérieure à la priorité d'une information de présence d'au moins une zone d'intervisibilité.

Toujours à partir des paramètres d'entrée mtA, mtB, mtC et mtD, le bloc 41 interface d'entrée extrait les paramètres de sortie planA, planB, planC et planD qui contiennent chacun éventuellement une information de planimétrie respectivement pour les points A, B, C et D, c'est-à-dire qui contiennent soit toujours une information de planimétrie dans le cas où la partie planimétrique de la base de données est du type carte papier numérisée (qu'il y ait effectivement ou non un élément planimétrique au pixel considéré) soit une information de planimétrie seulement s'il y a effectivement un élément de planimétrie au pixel considéré dans le cas où la partie planimétrique de la base de données est du type vectoriel, et les envoie vers le bloc 46 d'interpolation de planimétrie. Les paramètres de sortie planA, planB, planC et planD sont codés sur 16 bits et envoyés vers le bloc 46 d'interpolation de planimétrie à une fréquence de 16 MHz. Pour chacun des points A, B, C et D, l'ensemble des paramètres d'entrée est codé sur 16 bits et arrive au bloc 41 d'interface d'entrée à une fréquence de 64 MHz tandis que l'ensemble des paramètres de sortie est codé sur 32 bits et repart du bloc 41 d'interface d'entrée à une fréquence de 16 MHz.

A partir des paramètres d'entrée mtadfx et mtadfy qui sont codés sur 5bits et qui arrivent à la fréquence de 64 MHz au bloc 41 interface d'entrée, le bloc 41 interface d'entrée extrait les paramètres de sortie adfx et adfy qui sont codés sur 5 bits et qui sont envoyés vers le bloc 47 de génération des coefficients d'interpolation à la fréquence de 16 MHz. Les paramètres de sorties adfx et adfx contiennent des parties fractionnaires des adresses d'accès à la mémoire de terrain qui représentent respectivement les coordonnées cartésiennes du point P dans la portion de plan définie par les points A, B, C et D, puisque le point P situé dans la mémoire cible est obtenu par une transformation des points A, B, C et D, situés dans la mémoire de terrain.

Le bloc 47 de génération des coefficients d'interpolation reçoit en provenance du bloc 41 interface d'entrée les paramètres d'entrée adfx et adfy à la fréquence de 16 MHz. Le bloc 47 de génération des coefficients d'interpolation calcule à partir des paramètres d'entrée adfx et adfy, des paramètres de sortie C1 et C2 lesquels vont ensuite être utilisés par le bloc 42 d'interpolation d'altitude, par le bloc 46 d'interpolation de planimétrie et éventuellement par le bloc 45 de gestion de forêt et d'intervisibilité. Les paramètres de sortie C1 et C2 sont envoyés à la fréquence de 32 MHz et véhiculent en fait les valeurs de quatre coefficients d'interpolation bilinéaire, une paire de coefficients d'interpolation bilinéaire envoyée à chaque coup d'horloge permettant l'envoi du jeu des quatre coefficients vers les blocs 42, 45 et 46, à une fréquence moitié valant 16 MHz laquelle fréquence est aussi la fréquence de réception des autres paramètres d'entrée par lesdits blocs 42, 45 et 46. Les quatre coefficients d'interpolation bilinéaire sont (16-adfx) (16-adfy), (adfx) (16-adfy), (16-adfx) (adfy) et (adfx) (adfy), respectivement associés aux points A, B, C et D.

Le bloc 47 de génération des coefficients d'interpolation calcule également à partir des paramètres d'entrée adfx et adfy, un paramètre de sortie itvsel qui va ensuite être éventuellement utilisé par le bloc 45 de gestion de forêt et d'intervisibilité. Le paramètre itvsel indique sur 2 bits quel est, entre les points A, B, C et D, le plus proche voisin du point P représentant le pixel courant, lorsque la mémoire de terrain et la mémoire cible sont superposées.

Le bloc 42 d'interpolation d'altitude reçoit en provenance du bloc 41 interface d'entrée les paramètres d'entrée altA, altB, altC et altD, et reçoit en provenance du bloc 47 de génération des coefficients d'interpolation les paramètres d'entrée C1 et C2 contenant les coefficients d'interpolation bilinéaire. Le bloc 42 calcule à partir des différents paramètres d'entrée le paramètre de sortie alt qui est l'altitude du point P, c'est-à-dire l'altitude du pixel courant, à l'aide de la formule suivante :

$$alt = \frac{[(16 - adfx) \cdot (16 - adfy) \cdot altA + adfx \cdot (16 - adfy) \cdot altB + (16 - adfx) \cdot adfy \cdot altC + adfx \cdot adfy \cdot altD]}{256}$$

Le résultat du calcul précédent, l'altitude alt du point P, est codé sur 12 bits, à savoir 10 bits de partie entière et 2 bits de partie fractionnaire.

Pour rendre l'impression de relief à l'écran, sur une image dite 2D5, la méthode utilisée consiste à modifier la luminosité du pixel courant de l'image considérée en fonction de la pente locale du terrain au niveau dudit pixel courant. Pour cela, un modèle d'éclairage à une ou plusieurs sources de lumière est utilisé. Le modèle avantageusement retenu utilise deux sources de lumière, une source ponctuelle située en haut et à gauche de l'écran d'affichage ainsi qu'une source uniforme diffuse située au-dessus du plan de l'écran d'affichage. Ainsi l'éclairement reçu par le pixel courant reflète la pente locale du terrain au niveau du pixel courant. La génération d'une facette représentative de la pente locale au niveau du pixel courant est réalisée par le bloc 43 de génération de facette tandis que la correspondance entre la facette représentative de la pente locale du terrain au niveau du pixel courant et la luminosité dudit pixel courant est réalisée par la table 21 d'ombrage. La facette est générée à l'aide des altitudes de quatre pixels situés autour du pixel courant, la proximité du voisinage relatif entre d'une part ces quatre pixels et d'autre part le pixel courant étant variable et dépendant de la valeur d'un éventuel zoom sur une partie de l'image.

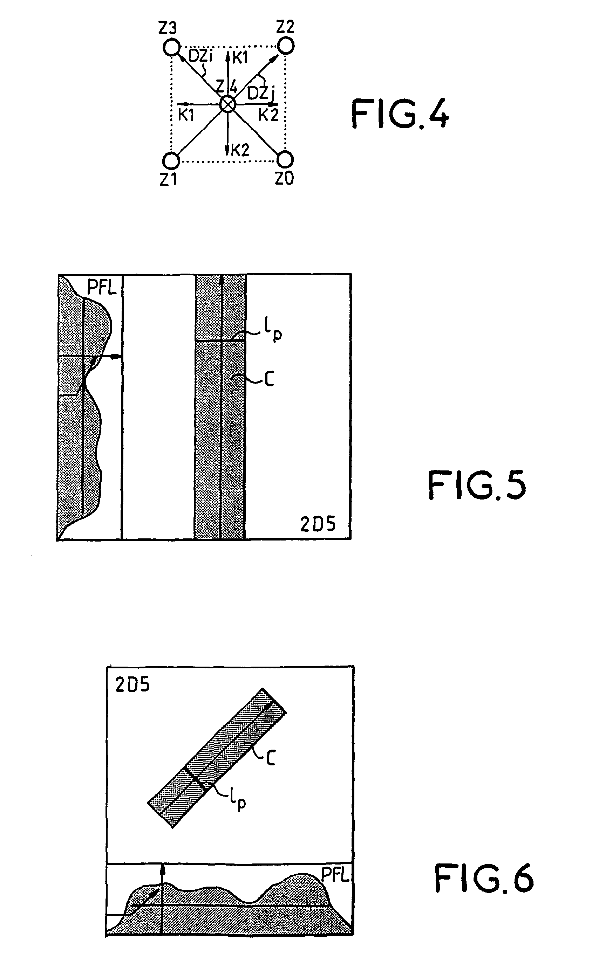

Le bloc 43 de génération de facette reçoit en provenance du bloc 42 d'interpolation d'altitude le paramètre d'entrée alt, en provenance du bloc 42 d'interpolation d'altitude par l'intermédiaire de la pile d'attente 31 le paramètre d'entrée alt retardé d'environ K2 lignes, en provenance du bloc 42 d'interpolation d'altitude par l'intermédiaire de la pile d'attente 31 et de la pile d'attente 32 le paramètre d'entrée alt retardé d'environ K2+K1 lignes. Le facteur K1+K2 est choisi proche de la valeur du zoom sur image éventuellement demandé par le pilote de l'aéronef ou par tout autre opérateur, la valeur de ce zoom pouvant varier par exemple environ de 1 (zoom unité correspondant en fait à une image non zoomée) à 8. Les valeurs de K1 et de K2 qui sont des valeurs entières sont choisies avantageusement de manière à être les plus proches possibles l'une de l'autre. En fonction de la valeur du zoom, K2 varie de 1 à 4 et K1 de 0 à 4. A l'aide de deux piles d'attente intégrées dans le bloc 43, lesquelles piles d'attente sont alors des registres à décalage compris dans le bloc 43 de génération de facette et ayant chacun une longueur de quelques points, ainsi qu'à l'aide des piles d'attente 31 et 32 ayant respectivement une longueur d'environ K2 lignes et d'environ K1 lignes, le bloc 43 de génération de facette peut disposer, à tout moment, des altitudes Z0 à Z4 de cinq points dont les positions relatives précises sont représentées schématiquement sur la figure 4. L'altitude Z4 est l'un des paramètres de sortie du bloc 43 de génération de facette.

Les points d'altitudes Z0 à Z3 forment les quatre sommets d'un carré. Les points d'altitudes Z0 et Z1 sont sur la même ligne et ont K1+K2 colonnes d'écart. Les points d'altitudes Z1 et Z3 sont sur la même colonne et ont K1+K2 lignes d'écart. Les points d'altitudes Z3 et Z2 sont sur la même ligne et ont K1+K2 colonnes d'écart. Les points d'altitudes Z2 et Z0 sont sur la même colonne et ont K1+K2 lignes d'écart. Le point d'altitude Z4 a, K1 lignes et K1 colonnes d'écart avec le point d'altitude Z3, K2 lignes et K2 colonnes d'écart avec le point d'altitude Z0, K1 lignes et K2 colonnes d'écart avec le point d'altitude Z2, K2 lignes et K1 colonnes d'écart avec le point d'altitude Z1. Le point d'altitude Z4 est donc situé sur les deux diagonales du carré, à savoir sur la diagonale reliant entre eux les points d'altitude Z3 et Z0 et sur la diagonale reliant entre eux les points d'altitude Z2 et Z1.

La facette au point d'altitude Z4 est déterminée par les pentes des deux diagonales du carré, et plus précisément par deux différences d'altitude, la différence d'altitude DZ30 entre les points d'altitudes Z3 et Z0 d'une part et la différence d'altitude DZ21 entre les points d'altitudes Z2 et Z1 d'autre part. Les égalités suivantes sont vérifiées :

$$DZ30 = Z3 - Z0 \quad \text{et} \quad DZ21 = Z2 - Z1$$

En fait les valeurs DZ30 et DZ21 ainsi obtenues qui sont codées sur 12 bits, à savoir 10 bits de partie entière et 2 bits de partie fractionnaire, sont ensuite saturées sur 5 bits. La correspondance respective entre les poids des bits du résultat sur 12 bits et les poids des bits de la valeur saturée sur 5 bits est variable et dépend de la valeur de l'échelle de l'image ainsi que de la valeur du zoom éventuellement appliqué sur une partie de l'image. Cette saturation limite la pente maximum représentable et empêche donc de représenter précisément les falaises, mais dans la pratique ceci n'est pas gênant pour le pilote qui d'une part rencontre peu de véritables falaises et d'autre part s'en fait une idée tout de même assez proche par l'intermédiaire de la valeur maximale de saturation correspondant à une pente d'environ soixante degrés. Les valeurs DZ30 et DZ21 sont codées sur 5 bits et sont donc comprises entre -16 et +15. Afin de n'avoir que des valeurs positives, la valeur 16 est alors ajoutée respectivement à DZ30 et à DZ21 pour donner respectivement les valeurs DZi et DZj. Les égalités suivantes sont vérifiées :

$$DZi = 16 + Z3 - Z0 \text{ et } DZj = 16 + Z2 - Z1$$

Les valeurs DZi et DZj alors obtenues qui sont des paramètres de sortie du bloc 43 de génération de facette et qui sont représentatives de la facette au niveau du pixel courant, et par conséquent de la pente locale au niveau dudit pixel courant, constituent les deux paramètres d'entrée de la table 21 d'ombrage dont le paramètre de sortie est le coefficient d'ombrage αomb qui est représentatif de la luminosité du pixel courant considéré.

La table 21 d'ombrage est une table de correspondance (« look up table » en terminologie anglo-saxonne), dont le couple de valeurs DZi et DZj (qui sont saturées) constitue une adresse dont le contenu constitue alors le coefficient d'ombrage αomb cherché. La table 21 d'ombrage comprend 1024 adresses correspondant aux 32X32 valeurs possibles du couple de valeurs DZi et DZj. Les adresses sont codées de manière à ce que l'égalité suivante soit vérifiée :

$$adresse(pixel \cdot courant) = 32DZj + DZi$$

Le coefficient d'ombrage αomb obtenu à l'aide de la table 21 d'ombrage est codé sur 7 bits, sa valeur varie donc de 0 correspondant à une luminosité du pixel courant égale à 0% (point pas du tout éclairé, sa couleur vire donc au noir) à 64 correspondant à une luminosité du pixel courant égale à 100% (point complètement éclairé, sa luminosité n'est pas modifiée et sa couleur d'origine n'est pas assombrie). La table 21 d'ombrage est programmée par logiciel. L'ensemble des valeurs de la table 21 d'ombrage est recalculé et reprogrammé à chaque changement d'échelle de l'image cartographique lequel changement entraîne une modification des valeurs chargées dans la mémoire de terrain ainsi qu'à chaque changement de la valeur du zoom lequel changement n'entraîne pas de modification des valeurs chargées dans la mémoire de terrain. Une simple modification du cap de l'aéronef ne modifie pas le contenu de la table 21 d'ombrage.

Le bloc 45 de gestion de la forêt et de l'intervisibilité reçoit, en provenance du bloc 41 interface d'entrée les paramètres d'entrée qui sont forA, forB, forC et forD, codés chacun sur 1 bit, d'une part, et itvA, itvB, itvC et itvD, codés sur 5 bits, d'autre part, en provenance du bloc 47 de génération des coefficients les paramètres d'entrée C1 et C2 et éventuellement le paramètre d'entrée itvsel. Les paramètres de sortie du bloc 45 de gestion de forêt et d'intervisibilité sont, pour chaque pixel courant, le coefficient forêt αfor et le coefficient intervisibilité αitv, tous deux codés sur 5 bits, ainsi qu'une donnée d'intervisibilité ditv au niveau dudit pixel courant.

Les paramètres d'entrée itvA, itvB, itvC et itvD, contiennent chacun une éventuelle information de présence d'au moins une zone d'intervisibilité. Plus précisément, les paramètres d'entrée itvA, itvB, itvC et itvD, contiennent respectivement les paramètres pitvA, pitvB, pitvC et pitvD, codés sur un bit, leur valeur à un signifiant la présence d'au moins une zone d'intervisibilité au pixel considéré, A, B, C ou D, et leur valeur à zéro signifiant l'absence de toute zone d'intervisibilité au pixel considéré, A, B, C ou D. Au niveau global d'une image complète, l'intervisibilité peut être validée ou non validée. Si l'intervisibilité est non validée, alors le coefficient intervisibilité αitv vaut uniformément zéro pour toute l'image considérée. Si l'intervisibilité est validée, alors le coefficient intervisibilité αitv est donné, au niveau de chaque pixel courant, par la formule suivante :

$$\alpha itv = \frac{[(16 - adfx) \cdot (16 - adfy) \cdot pitvA + adfx \cdot (16 - adfy) \cdot pitvB + (16 - adfx) \cdot adfy \cdot pitvC + adfx \cdot adfy \cdot pitvD]}{256}$$

Les contours d'une zone d'intervisibilité sont les limites entre une zone de présence d'intervisibilité correspondant par exemple à une menace donnée et une zone d'absence de ladite intervisibilité. Les pixels appartenant aux dits contours risquent d'avoir des valeurs pitvA, pitvB, pitvC et pitvD qui ne sont pas toutes identiques, ce qui donne alors un coefficient intervisibilité αitv strictement compris entre zéro et un. Ce risque devient certain pour les pixels appartenant aux contours de l'ensemble des zones d'intervisibilité, car ces pixels appartiennent aux contours d'au moins une zone d'intervisibilité mais n'appartiennent à l'intérieur d'aucune zone d'intervisibilité.

Les paramètres d'entrée itvA, itvB, itvC et itvD, contiennent chacun une donnée d'intervisibilité, respectivement ditvA, ditvB, ditvC et ditvD, qui peut se présenter soit sous la forme d'une donnée continue sur 4 bits, soit sous la forme de quatre données binaires relatives respectivement à quatre altitudes potentielles de l'aéronef différentes entre elles. Dans le cas d'une donnée continue, le paramètre de sortie ditv est donné, au niveau de chaque pixel courant, par la formule suivante :

$$ditv = \frac{\left[(16-adfx)\cdot(16-adfy)\cdot ditvA + adfx\cdot(16-adfy)\cdot ditvB + (16-adfx)\cdot adfy\cdot ditvC + adfx\cdot adfy\cdot ditvD\right]}{256}$$

Dans le cas de quatre données binaires, grâce au coefficient itvsel codé sur 2 bits, le plus proche voisin, parmi les points A, B, C et D, du point P correspondant au pixel courant est déterminé et la donnée d'intervisibilité du pixel courant est une recopie de la donnée d'intervisibilité du plus proche voisin ; par exemple, si A est le plus proche voisin de P, alors ditv=ditvA.

Les paramètres d'entrée forA, forB, forC et forD, contiennent chacun une éventuelle information de présence d'une zone de forêt. Les paramètres d'entrée forA, forB, forC et forD, sont codés sur un bit, leur valeur à un signifiant la présence d'une zone de forêt au pixel considéré, A, B, C ou D, et leur valeur à zéro signifiant l'absence de zone de forêt au pixel considéré, A, B, C ou D. Au niveau global d'une image complète, la forêt peut être validée ou non validée. Si la forêt est non validée, alors le coefficient forêt αfor vaut uniformément zéro pour toute l'image considérée. Dans le type de mode anticollision, la forêt est toujours non validée. Si la forêt est validée, alors le coefficient forêt αfor est donné, au niveau de chaque pixel courant, par la formule suivante :

$$\alpha for = \frac{\left[(16-adfx)\cdot(16-adfy)\cdot forA + adfx\cdot(16-adfy)\cdot forB + (16-adfx)\cdot adfy\cdot forC + adfx\cdot adfy\cdot forD\right]}{256} - \alpha itv$$

le coefficient forêt αfor devant être compris entre zéro et un, il est ensuite forcé à zéro dans le cas où la formule précédente donne un résultat négatif.

Les contours d'une zone de forêt sont les limites entre une zone de présence de forêt et une zone d'absence de forêt. Les pixels appartenant aux dits contours ont des risquent d'avoir des valeurs forA, forB, forC et forD, qui ne sont pas toutes identiques, ce qui donne alors un coefficient forêt αfor strictement compris entre zéro et un.

L'ensemble des paramètres de sortie du bloc 45 de gestion de forêt et d'intervisibilité est retardé d'environ K2 lignes par l'intermédiaire d'une pile d'attente 33 afin que les paramètres d'entrée de l'additionneur 13 arrivent en phase les uns avec les autres.

Le bloc 44 profile et le multiplexeur 11 n'interviennent que dans le cas d'une image cartographique profile, ils seront par conséquent décrits ultérieurement dans ce contexte. Dans le cas d'une image cartographique 2D5, représentant une vue de dessus du terrain à laquelle a été ajoutée une information de relief du terrain, ladite information de relief du terrain étant représentée au travers du coefficient d'ombrage αomb, le bloc 44 profile se contente, dans un mode de fonctionnement dégradé, de transmettre l'altitude Z4 à l'entrée du soustracteur 12 et le multiplexeur 11 se contente, dans un mode de fonctionnement dégradé, de faire passer l'image coloration hypsométrique ou anticollision coHG de la sortie de la table 22 hypsométrique ou anticollision (notée table Hypso GCAS sur la figure 3) à l'entrée du bloc 15 mélange hypsométrique ou anticollision.

Le bloc 10 priorité anticollision danger est actif uniquement dans le type de mode anticollision, il est par contre inhibé et inactif dans le type de mode hypsométrique. L'un des paramètres de sortie du bloc 44 profile constitue l'un des paramètres d'entrée du bloc 10 priorité anticollision danger. Dans le cas d'une image cartographique 2D5, ce paramètre est l'altitude Z4. Une altitude seuil danger altsd, dépendant de l'altitude de l'aéronef, constitue l'autre paramètre d'entrée du bloc 10 priorité anticollision danger. L'altitude seuil danger altsd est déterminée de manière à ce que, lorsque l'altitude Z4 est supérieure à l'altitude seuil danger altsd, il existe soit un danger de collision entre le terrain et l'aéronef dans certains cas soit un risque de danger de collision entre le terrain et l'aéronef dans d'autres cas qui mérite d'être signalé au pilote en priorité par rapport à tout autre type d'information. Par exemple dans un type de mode anticollision genre GCAS (de la terminologie anglo-saxonne « ground collision avoidance system »), à trois couleurs rouge, ambre et verte, le danger de collision correspond à la couleur rouge et le risque de danger de collision correspond à la couleur orange. L'information de danger de collision correspond à un risque certain de collision tandis que le risque de danger de collision est une marge de sécurité dans laquelle le risque est indéterminé car fonction des incertitudes globales du système. Généralement l'altitude seuil danger altsd est choisie égale à l'altitude altav de l'aéronef. Dans le cas où l'altitude Z4 est supérieure à l'altitude seuil danger altsd, le paramètre de sortie du bloc 10 priorité anticollision danger a pour effet de modifier le fonctionnement normal du bloc 14 de gestion des coefficients et d'imposer à ce bloc 14 de gestion des coefficients de forcer les coefficients forêt αfor et intervisibilité αitv à zéro d'une part et de forcer le coefficient hypsométrique ou anticollision αHG à un ; dans le cas contraire, le bloc 10 priorité anticollision danger ne modifie pas le fonctionnement normal du bloc 14 de gestion des coefficients. Dans tous les cas, la donnée d'intervisibilité ditv au niveau du pixel courant, qui est un paramètre d'entrée, est transmise sans modification comme paramètre de sortie. Le fonctionnement normal du bloc 14 de gestion des coefficients consiste à transmettre, sans modification, en paramètres de sortie les coefficients forêt αfor et intervisibilité αitv reçus en paramètres d'entrée, et de calculer le coefficient hypsométrique ou anticollision αHG en fonction des coefficients forêt αfor et intervisibilité αitv par la formule suivante : αHG

= 1-$\alpha$*for*-$\alpha$*itv.* La façon de déterminer les différents coefficients $\alpha$HG, $\alpha$for et $\alpha$itv, ainsi que la présence du bloc 10, définissent un ordre de priorité des différentes informations participant à la constitution de l'image altimétrique.

Pour l'élaboration d'une image coloration hypsométrique ou anticollision, deux types de mode de fonctionnement sont possibles, le type de mode hypsométrique générant une image coloration hypsométrique et le type de mode anticollision générant une image coloration anticollision, par exemple de type GCAS.

Dans le type de mode hypsométrique, la couleur de l'image coloration hypsométrique est une fonction de l'altitude absolue du terrain et va du vert à l'ocre rouge comme pour les cartes papier usuelles de type atlas. La table 22 hypsométrique ou anticollision qui est une table de correspondance similaire à la table 21 d'ombrage est chargée avec des valeurs correspondant à la coloration hypsométrique. Le soustracteur 12 n'intervient alors pas, il se contente de faire suivre l'altitude Z4 du pixel courant à l'entrée de la table 22 hypsométrique ou anticollision laquelle table 22 émet en sortie une coloration hypsométrique coHG pour le pixel courant, l'ensemble des colorations hypsométriques coHG pour tous les pixels courants constituant l'image coloration hypsométrique. Le bloc 15 de mélange hypsométrique ou anticollision reçoit comme paramètres d'entrée la coloration hypsométrique coHG du pixel courant en provenance du multiplexeur 11 et le coefficient hypsométrique ou anticollision $\alpha$HG en provenance du bloc 14 de gestion des coefficients. Le bloc 15 de mélange hypsométrique ou anticollision réalise la modulation, pixel par pixel, de la coloration hypsométrique coHG du pixel courant par le coefficient hypsométrique ou anticollision $\alpha$HG du pixel courant, ladite modulation consistant en un produit entre la coloration hypsométrique coHG et le coefficient hypsométrique ou anticollision $\alpha$HG.

Dans le type de mode anticollision, la couleur de l'image coloration anticollision est une fonction de l'altitude relative du terrain, c'est-à-dire de la différence d'altitude entre l'aéronef et le terrain, et se traduit par exemple par la coloration GCAS (de « Ground Collision Avoidance System » en terminologie anglo-saxonne) usuelle qui comporte les couleurs rouge, ambre et verte. La couleur verte, qui est une couleur de sécurité, est associée aux portions de terrain dont l'altitude est sans aucun doute inférieure à celle de l'aéronef. La couleur rouge, qui est une couleur de danger, est associée aux portions de terrain dont l'altitude est sans aucun doute supérieure à celle de l'aéronef, ce qui entraînerait un crash en cas de survol par ledit aéronef desdites portions de terrain. La couleur ambre est une autre couleur qui, compte tenu des incertitudes inhérentes à l'ensemble du système cartographique, est associée aux portions de terrain pour lesquelles un crash en cas de survol est possible mais non certain, c'est en fait une sorte de marge de sécurité. La table 22 hypsométrique ou anticollision qui est une table de correspondance similaire à la table 21 d'ombrage est chargée avec des valeurs correspondant à la coloration anticollision. Le soustracteur 12 intervient et réalise la soustraction entre l'altitude altav de l'aéronef et l'altitude Z4 du pixel courant, le résultat dz de la soustraction étant émis en sortie pour alimenter l'entrée de la table 22 hypsométrique ou anticollision laquelle table 22 émet en sortie une coloration anticollision coHG pour le pixel courant, laquelle coloration coHG est par exemple l'une des couleurs de la coloration GCAS usuelle, l'ensemble des colorations anticollision pour tous les pixels courants constituant l'image coloration anticollision. Le bloc 15 de mélange hypsométrique ou anticollision reçoit comme paramètres d'entrée la coloration anticollision coHG du pixel courant en provenance du multiplexeur 11 et le coefficient hypsométrique ou anticollision $\alpha$HG du pixel courant en provenance du bloc 14 de gestion des coefficients. Le bloc 15 de mélange hypsométrique ou anticollision réalise la modulation, pixel par pixel, de la coloration anticollision coHG du pixel courant par le coefficient hypsométrique ou anticollision $\alpha$HG du pixel courant, ladite modulation consistant en un produit entre la coloration anticollision coHG et le coefficient hypsométrique ou anticollision $\alpha$HG.

Une couleur forêt cofor est contenue dans un registre 23 couleur de forêt. Le bloc 16 de mélange forêt réalise la modulation, pixel par pixel, de la couleur forêt cofor (commune à tous les pixels) par le coefficient forêt $\alpha$for du pixel courant, ladite modulation consistant en un produit entre la couleur forêt cofor et le coefficient forêt $\alpha$for. La formule de calcul du coefficient forêt $\alpha$for permet de réaliser un lissage du contour des zones de forêt, lequel lissage supprime les effets « marches d'escalier » qui sont particulièrement gênants essentiellement en dynamique. L'ordre des priorités entre les différentes informations participant à la constitution de l'image altimétrique n'est par conséquent plus strictement vérifié pour les pixels appartenant aux contours d'une zone de présence de forêt.

La couleur forêt n'intervient que dans le type de mode hypsométrique, car en type de mode anticollision, la forêt est non validée et par conséquent le coefficient forêt $\alpha$for est forcé à zéro pour toute l'image considérée.

La table 24 d'intervisibilité qui est une table de correspondance similaire à la table 21 d'ombrage est chargée avec des valeurs correspondant au type de donnée d'intervisibilité ditv disponible sur son entrée qui peut être soit une donnée continue sur 4 bits soit un quadruplet de données binaires. Dans le cas d'une donnée continue sur quatre bits, la valeur de ladite donnée peut aller d'une valeur extrême danger liée à une présence certaine d'au moins une zone d'intervisibilité à une valeur extrême sécurité liée à la certitude d'absence de zone d'intervisibilité dans la zone de portée de menace considérée dans le cas de l'intervisibilité indirecte ou dans le secteur de visibilité de l'aéronef dans le cas de l'intervisibilité directe ; les couleurs respectivement associées aux dites valeurs vont de la couleur unie danger à la couleur unie sécurité en passant par tout un dégradé de couleurs intermédiaires unies, chaque dégradé étant plus ou moins proche d'une des couleurs extrêmes selon que la probabilité de présence d'au moins une zone d'intervisibilité est plus ou moins élevée. Dans le cas d'un quadruplet de données binaires, le résultat fourni par la table 24 d'intervisibilité ne dépend que de la donnée binaire correspondant à l'altitude effective de l'aéronef ou le cas échéant que des deux données binaires encadrant l'altitude effective de l'aéronef. Lorsque ledit résultat ne dépend que des deux données binaires encadrant l'altitude effective de l'aéronef, et que les deux données sont différentes, c'est la donnée de présence d'au moins une zone d'intervisibilité correspondant à la couleur unie danger qui est prioritaire et qui est par conséquent seule retenue. La table 24 d'intervisibilité est programmée par logiciel comme les autres tables de correspondance. La donnée d'intervisibilité ditv du pixel courant arrive à l'entrée de la table 24 d'intervisibilité laquelle table 24 émet en sortie une coloration d'intervisibilité coitv pour le pixel courant, l'ensemble des colorations d'intervisibilité pour tous les pixels constituant l'image d'intervisibilité. La coloration d'intervisibilité est soit une couleur unie danger, par exemple le rouge, pour les zones de présence d'au moins une zone d'intervisibilité, soit une couleur unie sécurité, par exemple le vert, pour une zone de portée d'au moins une menace n'incluant aucune zone d'intervisibilité dans certains cas ou pour le secteur de visibilité de l'aéronef dans d'autres cas, les parties de l'image d'intervisibilité situées à l'extérieur de toutes les zones précédentes sont considérées comme vides, aucune coloration ne leur étant affectée. Une couleur unie recouvrant toute la partie de l'image qu'elle représente s'oppose aux textures colorées de l'art antérieur en forme de grillage dont le grillage ne recouvre qu'une partie de la zone de l'image que la texture représente. Le bloc 17 de mélange intervisibilité reçoit comme paramètres d'entrée la coloration intervisibilité coitv du pixel courant et le coefficient d'intervisibilité $\alpha$itv du pixel courant, tous deux en provenance du bloc 14 de gestion des coefficients. Le bloc 17 de mélange intervisibilité réalise la modulation, pixel par pixel, de la coloration intervisibilité coitv du pixel courant par le coefficient intervisibilité $\alpha$itv du pixel courant, ladite modulation consistant en un produit entre la coloration intervisibilité coitv et le coefficient intervisibilité $\alpha$itv. La formule de calcul du coefficient intervisibilité $\alpha$itv permet de réaliser un lissage du contour des zones d'intervisibilité, lequel lissage supprime les effets « marches d'escalier » qui sont particulièrement gênants essentiellement en dynamique. L'ordre des priorités entre les différentes informations participant à la constitution de l'image altimétrique n'est par conséquent plus nécessairement strictement vérifié pour les pixels appartenant aux contours d'une zone de présence d'intervisibilité. La coloration intervisibilité intervient aussi bien dans le type de mode hypsométrique que dans le type de mode anticollision (sauf bien sûr demande contraire du pilote au travers de l'interface homme machine qui peut invalider l'intervisibilité comme la forêt globalement au niveau de toute l'image).

L'additionneur 13 réalise l'addition, pixel par pixel, entre ses trois paramètres d'entrée qui sont respectivement le paramètre de sortie du bloc 15 de mélange hypsométrique ou anticollision, à savoir la coloration hypsométrique ou anticollision modulée, le paramètre de sortie du bloc 16 de mélange forêt, à savoir la couleur forêt modulée, le paramètre de sortie du bloc 17 de mélange intervisibilité, à savoir la coloration intervisibilité modulée. Le résultat de cette addition constitue en chaque pixel l'information altimétrique aussi appelée couleur altimétrique, l'ensemble des informations altimétriques de tous les pixels constituant l'image altimétrique. La couleur altimétrique est codée sur 18 bits, 6 bits par composante de couleur rouge, verte et bleue.

Le bloc 46 d'interpolation de planimétrie reçoit, en provenance du bloc 41 interface d'entrée les paramètres d'entrée qui sont planA, planB, planC et planD, codés chacun sur 16 bits, et représentant, respectivement au niveau des points A, B, C et D, des éléments classiques de planimétrie comme par exemple des routes, des fleuves et de lacs, des réseaux, des zones aéronautiques. Le bloc 46 d'interpolation de planimétrie reçoit aussi, en provenance du bloc 47 de génération des coefficients les paramètres d'entrée C1 et C2. Les paramètres de sortie du bloc 46 d'interpolation de planimétrie sont, pour chaque pixel courant, le coefficient planimétrie $\alpha$plan, codé sur 4 bits, ainsi qu'une information planimétrique au niveau dudit pixel courant aussi appelée couleur planimétrique au niveau dudit pixel courant, l'ensemble des informations planimétriques de tous les pixels constituant l'image planimétrique.

Les paramètres d'entrée planA, planB, planC et planD, contiennent chacun un coefficient planimétrie, respectivement $\alpha$pA, $\alpha$pB, $\alpha$pC et $\alpha$pD, lequel est codé sur 4 bits et vaut zéro en cas d'absence d'élément de planimétrie au point considéré. Le coefficient planimétrie $\alpha$plan est donné, au niveau de chaque pixel courant, par la formule suivante :

$$\alpha plan = \frac{[(16 - adfx) \cdot (16 - adfy) \cdot \alpha pA + adfx \cdot (16 - adfy) \cdot \alpha pB + (16 - adfx) \cdot adfy \cdot \alpha pC + adfx \cdot adfy \cdot \alpha pD]}{256}$$

Les paramètres d'entrée planA, planB, planC et planD, contiennent également chacun une donnée de planimétrie, respectivement dpA, dpB, dpC et dpD, qui se présente sous la forme de la juxtaposition de trois données de composante de couleur rouge (RdpA, RdpB, RdpC et RdpD,), verte (VdpA, VdpB, VdpC et VdpD,) et bleue (BdpA, BdpB, BdpC et BdpD,), chaque composante de couleur étant codée sur 4 bits. Le paramètre de sortie, la couleur planimétrique coplani, est codée sur 18 bits car constituée de la juxtaposition de trois données de composante de couleur rouge Rp, verte Vp et bleue Bp, chaque composante de couleur étant codée sur 6 bits, et étant donnée, au niveau de chaque pixel courant, par l'une des formules suivantes :

$$Rp = \frac{\left[(16 - adfx) \cdot (16 - adfy) \cdot RdpA + adfx \cdot (16 - adfy) \cdot RdpB + (16 - adfx) \cdot adfy \cdot RdpC + adfx \cdot adfy \cdot RdpD\right]}{256}$$

$$Vp = \frac{\left[(16 - adfx) \cdot (16 - adfy) \cdot VdpA + adfx \cdot (16 - adfy) \cdot VdpB + (16 - adfx) \cdot adfy \cdot VdpC + adfx \cdot adfy \cdot VdpD\right]}{256}$$

$$Bp = \frac{\left[(16 - adfx) \cdot (16 - adfy) \cdot BdpA + adfx \cdot (16 - adfy) \cdot BdpB + (16 - adfx) \cdot adfy \cdot BdpC + adfx \cdot adfy \cdot BdpD\right]}{256}$$

L'ensemble des paramètres de sortie du bloc 46 d'interpolation de planimétrie est retardé d'environ K2 lignes par l'intermédiaire de deux piles d'attente 33 et 34 afin que lesdits paramètres de sortie soient en phase avec l'information altimétrique disponible à la sortie de l'additionneur 13.

Les paramètres d'entrée du bloc 18 d'application d'ombrage sont, pour chaque pixel courant, l'information altimétrique ou couleur altimétrique coalti en provenance de l'additionneur 13, l'information planimétrique ou couleur planimétrique coplani en provenance de la pile d'attente 34, et le coefficient d'ombrage αomb en provenance de la table 21 d'ombrage. Le bloc 18 d'application d'ombrage comporte deux types de mode de fonctionnement. L'un des types de mode de fonctionnement est le type de mode de fonctionnement normal dans lequel le coefficient d'ombrage αomb module la couleur altimétrique coalti mais pas la couleur planimétrique coplani, la modulation consistant en la réalisation du produit αomb par coalti pixel par pixel, ce produit devenant la couleur altimétrique modulée coalti, la couleur planimétrique étant alors transmise sans modification entre l'entrée et la sortie du bloc 18 d'application d'ombrage. L'autre type de mode de fonctionnement est le type de mode de fonctionnement inversé dans lequel le coefficient d'ombrage αomb module la couleur planimétrique coplani mais pas la couleur altimétrique coalti, la modulation consistant en la réalisation du produit αomb par coplani pixel par pixel, ce produit devenant la couleur planimétrique modulée coplani, la couleur altimétrique étant alors transmise sans modification entre l'entrée et la sortie du bloc 18 d'application d'ombrage. Les paramètres de sortie du bloc 18 d'application d'ombrage sont d'une part coalti, couleur altimétrique modulée dans le type de fonctionnement normal ou couleur altimétrique non modulée dans le type de fonctionnement inversé, et d'autre part coplani, couleur planimétrique non modulée dans le type de fonctionnement normal ou couleur planimétrique modulée dans le type de fonctionnement inversé.

Le bloc 19 de mélange altimétrie/planimétrie reçoit comme paramètres d'entrée les couleurs coalti et coplani en provenance du bloc 18 d'application d'ombrage ainsi que le coefficient planimétrie αplan en provenance du bloc de la pile d'attente 33 mais ayant été ensuite retardé par le bloc 35 de retard afin d'être en phase avec les couleurs coalti et coplani. Le mélange entre couleurs coalti et coplani se fait, pixel par pixel, à l'aide du coefficient planimétrie αplan, le résultat étant l'information cartographique encore appelée couleur cartographique cocarto. La loi de mélange peut être de différents types. Un exemple de loi de mélange est la loi dite normale dont l'expression est la suivante: *cocarto = coplani* + (1-α*plan*) · *coalti*. Un autre exemple de loi de mélange est la loi dite en $K^2$ dont l'expression est la suivante : *cocarto* = α*plan* · *coplani* + (1-α*plan*) · *coalti*. IL est également possible de compléter ces différentes lois par un seuillage du type *cocarto = coplani* si le coefficient planimétrie αplan dépasse un seuil donné. Le bloc 19 de mélange altimétrie/ planimétrie peut également intégrer une table de correspondance similaire à la table 21 d'ombrage. Cette table de correspondance permet d'associer à toutes les valeurs du coefficient planimétrie αplan un couple de coefficients β*alti* et β*plani*, par exemple codés sur 5 bits chacun, le mélange s'effectuant alors selon la formule suivante: *cocarto* = β*alti* · *coalti* + β*plani* · *coplani*, formule qui permet de simuler, par l'intermédiaire d'une programmation adaptée de la table de correspondance, bon nombre de lois de mélange y compris des lois non linéaires du type loi à seuil. Dans la combinaison pondérée permettant d'obtenir les informations cartographiques constituant l'image cartographique, l'image altimétrique considérée est allégée, c'est-à-dire qu'en sont retirées au moins l'information de présence d'une zone de forêt, l'information de zone de portée de menace ou de secteur de visibilité de l'aéronef selon les cas, ainsi que les colorations hypsométriques ou anticollision ne représentant ni danger de collision ni risque de danger de collision et parfois même les informations d'intervisibilité, le tout afin de rendre la lecture de la carte plus efficace pour le pilote. On réalise ainsi un bon compromis densité/lisibilité des informations affichées. Dans le cas où la partie planimétrique de la base de données est de type carte papier numérisée, lorsque la densité d'informations planimétrique est trop riche ou que l'ombrage existe de manière trop marquée, dans un souci de lisibilité de la carte le coefficient d'ombrage αomb est inhibé, ne modulant alors ni l'image planimétrique ni l'image altimétrique, correspondant alors à un type de mode de fonctionnement dit inversé dégradé.

En aval du bloc 19 de mélange altimétrie/planimétrie la couleur cartographique cocarto peut être modifiée à volonté à l'aide de la palette 25 qui permet la transformation aussi bien des composantes de couleur que de la luminance ou du contraste de l'image cartographique constituée par l'ensemble des couleurs cartographiques cocarto de tous les pixels. La couleur cartographique cocarto traverse ensuite le bloc 36 « latch&fifoPFLH » qui dans le cas d'une image cartographique 2D5 met sur un bus de sortie 37, à destination de la fonction de gestion de la carte accélérateur cartographique pour écriture dans la mémoire cible, l'image cartographique à un format et à une fréquence adaptés au bus de sortie 37. La fonction « latch » du bloc 36 permet d'adapter le débit de sortie des pixels de l'image cartographique 2D5 ou de l'image cartographique profile verticale sur le bus 37 de sortie qui est par exemple un bus de 32 bits. La fonction « fifoPFLH » du bloc 36 d'adapter le débit sur le bus 37 de sortie au type de balayage de la mémoire cible (vertical puis horizontal au lieu de horizontal puis vertical comme pour les images cartographiques 2D5 ou profile verticale). Cela permet de conserver une écriture dans la mémoire cible pour une image profile horizontale qui soit homogène avec celle pour une image cartographique 2D5 ou profile verticale ; en effet, l'écriture d'une image cartographique 2D5 ou profile verticale est réalisée ligne par ligne, tandis que l'écriture d'une image cartographique profile horizontale est réalisée double colonne par double colonne. Lorsqu'une image cartographique et une image profile doivent être affichées sur un même écran, la carte accélérateur cartographique les calcule et les affiche successivement dans le temps, de manière périodique, en reprogrammant toutes les tables entre chaque calcul.

Le bloc 44 profile et le multiplexeur 11 interviennent dans le cas d'une image cartographique profile, que celle-ci soit verticale comme sur la figure 5 ou horizontale comme sur la figure 6, l'image cartographique profile étant alors représentée par le sigle PFL. Cette image cartographique profile représente une coupe du terrain survolé. L'altitude représentée sur l'image cartographique profile correspond préférentiellement au majorant de l'altitude du terrain sur une ligne qui appartient au couloir C et qui est perpendiculaire à la flèche, par exemple la ligne lp appelée tranche du couloir C, le couloir C étant une bande de terrain représentée par un rectangle sur les figures 5 et 6, le flèche représentant le cap de l'aéronef. Cette image cartographique profile se rajoute à l'image cartographique 2D5, soit sous la forme d'une fenêtre généralement située à gauche de l'image cartographique 2D5 dans le repère de l'écran d'affichage dans le cas d'une image cartographique profile verticale comme sur la figure 5, soit sous la forme d'une fenêtre généralement située en dessous de l'image cartographique 2D5 dans le repère de l'écran d'affichage dans le cas d'une image cartographique profile horizontale comme sur la figure 6. Dans le repère de l'écran d'affichage, le sens de balayage va, sur la figure 5 de gauche à droite pour une ligne puis de bas en haut pour les différentes lignes, sur la figure 6 de bas en haut pour une colonne puis de gauche à droite pour les différentes colonnes. Le sens de balayage est indiqué sur les figures 5 et 6 par deux flèches dans la fenêtre PFL ; le cap de l'aéronef est indiqué sur les figures 5 et 6 par une flèche dans la fenêtre 2D5. La luminance de l'image cartographique profile est constante et par conséquent indépendante du coefficient d'ombrage $\alpha$omb, les deux types de mode hypsométrique et anticollision restant possibles. Aucune information d'intervisibilité, de forêt ou de planimétrie n'est représentée.

Dans le cas d'une image cartographique profile, le bloc 44 profile détecte l'altitude maximale altmax du terrain sur chaque tranche du couloir C considéré, les pixels de l'image cartographique dont l'altitude est supérieure à l'altitude altmax correspondent au ciel et sont représentés par une couleur copflc (commune à tous les pixels) de ciel. Les pixels de l'image cartographique dont l'altitude est inférieure à l'altitude altmax correspondent au terrain et sont représentés, soit par une couleur copfls (commune à tous les pixels) du terrain qui est uniforme et indépendante de l'altitude du terrain représenté, soit par la coloration hypsométrique ou anticollision dans le type de mode hypsométrique ou anticollision, des paramètres de contrôlé du multiplexeur 11, non représentés sur le figure 3, permettant au pilote de choisir l'une ou l'autre représentation. Le multiplexeur 11 choisit, par l'intermédiaire desdits paramètres de contrôle, entre les paramètres d'entrée, coHG, copflc et copfls, celui qu'il va transmettre en sortie à destination du bloc 15 de mélange hypsométrique ou anticollision. Le bloc 44 profile indique, pixel par pixel, à l'aide du paramètre pflc, si le pixel courant correspond au ciel ou au terrain selon que ce pixel courant a une altitude supérieure ou inférieure à l'altitude altmax du couloir C considéré. Le fonctionnement, dans le cas d'une image cartographique profile, du soustracteur 12, de la table 22 hypsométrique ou anticollision, et du bloc 15 de mélange hypsométrique ou anticollision, sont similaires à leur fonctionnement dans le cas d'une image cartographique 2D5.

**Revendications**

1. Procédé de synthèse d'une image altimétrique constituée de pixels et représentant en couleur un terrain survolé par un aéronef, comportant au moins un mode anticollision normal dans lequel la couleur représentant le terrain dépend en chaque pixel au moins à la fois, de la différence d'altitude (dz) entre l'aéronef et le terrain se traduisant soit par une information de danger de collision entre l'aéronef et le terrain soit par une information de proximité entre l'altitude de l'aéronef et l'altitude du terrain, et d'une éventuelle information de présence d'au moins une zone d'intervisibilité entre l'aéronef et une menace potentielle donnée, **caractérisé en ce que** l'ordre décroissant des priorités entre informations est le suivant, d'abord l'information de danger de collision, puis l'information de présence d'au moins une zone d'intervisibilité, ensuite l'information de proximité, **en ce qu'**en chaque pixel n'étant pas situé au niveau des contours d'une zone d'intervisibilité, seule l'information existante la plus prioritaire est retenue pour la constitution de l'image altimétrique, et **en ce qu'**en chaque pixel, la couleur de l'image altimétrique peut être modulée par une information d'ombrage ($\alpha$omb) représentative du relief du terrain en ledit pixel.

**2.** Procédé de synthèse d'une image altimétrique selon la revendication 1, **caractérisé en ce que** l'information de danger de collision et l'information de présence d'au moins une zone d'intervisibilité sont respectivement représentées par deux teintes distinctes entre elles d'une seule et même couleur.

**3.** Procédé de synthèse d'une image altimétrique selon la revendication 2, **caractérisé en ce que** l'information de danger de collision est représentée par une teinte plutôt vive de la couleur et **en ce que** l'information de présence d'au moins une zone d'intervisibilité est représentée par une teinte plutôt pastel de la couleur.

**4.** Procédé de synthèse d'une image altimétrique selon l'une quelconque des revendications 2 à 3, **caractérisé en ce que** la couleur représentant le terrain dépend également d'une éventuelle information de présence d'au moins une zone de portée d'une menace potentielle donnée, **en ce que** l'ordre décroissant des priorités devient alors le suivant, d'abord l'information de danger de collision, puis l'information de présence d'au moins une zone d'intervisibilité, ensuite l'information de présence d'au moins une zone de portée, enfin l'information de proximité.

**5.** Procédé de synthèse d'une image altimétrique selon la revendication 4, **caractérisé en ce que** l'information de présence d'au moins une zone de portée et l'information de présence d'au moins une zone d'intervisibilité sont représentées par une même teinte de deux couleurs distinctes entre elles.

**6.** Procédé de synthèse d'une image altimétrique selon l'une quelconque des revendications précédentes, **caractérisé en ce qu'**une opération de lissage est réalisée pour tous les pixels appartenant aux contours de l'ensemble des zones d'intervisibilité.

**7.** Procédé de synthèse d'une image altimétrique selon l'une quelconque des revendications précédentes, **caractérisé en ce que** le procédé comporte au moins un mode hypsométrique normal dans lequel la couleur représentant le terrain dépend en chaque pixel au moins à la fois, de l'altitude (Z4) du terrain se traduisant par une information d'altitude du terrain, d'une éventuelle information de présence ($\alpha$for) d'une zone de forêt et d'une éventuelle information de présence d'au moins une zone d'intervisibilité entre l'aéronef et une menace potentielle donnée, **caractérisé en ce que** l'ordre décroissant des priorités entre informations est le suivant, d'abord l'information de présence d'au moins une zone d'intervisibilité, puis l'information de présence ($\alpha$for) de forêt, ensuite l'information d'altitude, **en ce qu'**en chaque pixel n'étant situé ni au niveau des contours d'une zone d'intervisibilité ni au niveau des contours d'une zone de forêt, seule l'information existante la plus prioritaire est retenue pour la constitution de l'image altimétrique, et **en ce qu'**en chaque pixel, la couleur de l'image altimétrique peut être modulée par une information d'ombrage ($\alpha$omb) représentative du relief du terrain en ledit pixel.

**8.** Procédé de synthèse d'une image altimétrique selon la revendication 7, **caractérisé en ce qu'**une opération de lissage est réalisée pour tous les pixels appartenant aux contours de l'ensemble des zones d'intervisibilité et pour tous les pixels appartenant aux contours de l'ensemble des zones de forêt.

**Claims**

**1.** Method of synthesizing an altimetric image consisting of pixels and representing in color a terrain overflown by an aircraft, comprising at least one normal anticollision mode in which the color representing the terrain depends at each pixel at least at one and the same time, on the difference in altitude (dz) between the aircraft and the terrain manifested either by a cue of danger of collision between the aircraft and the terrain or by a cue of proximity between the altitude of the aircraft and the altitude of the terrain, and on a possible cue of presence of at least one zone of intervisibility between the aircraft and a given potential threat, **characterized in that** the descending order of priorities between cues is as follows, firstly the collision danger cue, then the cue of presence of at least one intervisibility zone, thereafter the proximity cue, **in that** at each pixel that is not situated at the level of the contours of an intervisibility zone, only the existing cue of highest priority is retained for the construction of the altimetric image, and **in that** at each pixel, the color of the altimetric image can be modulated by a shading cue (sha) representative of the relief of the terrain at said pixel.

**2.** Method of synthesizing an altimetric image according to Claim 1, **characterized in that** the collision danger cue and the cue of presence of at least one intervisibility zone are respectively represented by two mutually distinct hues of one and the same color.

**3.** Method of synthesizing an altimetric image according to Claim 2, **characterized in that** the collision danger cue is represented by a rathermore vivid hue of the color and **in that** the cue of presence of at least one intervisibility zone is represented by a rathermore pastel hue of the color.

4. Method of synthesizing an altimetric image according to either of Claims 2 and 3, **characterized in that** the color representing the terrain also depends on a possible cue of presence of at least one zone of range of a given potential threat, **in that** the descending order of priorities then becomes the following, firstly the collision danger cue, then the cue of presence of at least one intervisibility zone, thereafter the cue of presence of at least one range zone, finally the proximity cue.

5. Method of synthesizing an altimetric image according to Claim 4, **characterized in that** the cue of presence of at least one range zone and the cue of presence of at least one intervisibility zone are represented by one and the same hue of two mutually distinct colors.

6. Method of synthesizing an altimetric image according to any one of the preceding claims, **characterized in that** a smoothing operation is carried out for all the pixels belonging to the contours of the entire set of intervisibility zones.

7. Method of synthesizing an altimetric image according to any one of the preceding claims, **characterized in that** the method comprises at least one normal hypsometric mode in which the color representing the terrain depends at each pixel at least at one and the same time, on the altitude (Z4) of the terrain manifested by a cue of altitude of the terrain, on a possible cue of presence (for) of a forest zone and on a possible cue of presence of at least one zone of intervisibility between the aircraft and a given potential threat, **characterized in that** the descending order of priorities between cues is the following, firstly the cue of presence of at least one intervisibility zone, then the cue of presence (for) of forest, thereafter the altitude cue, **in that** at each pixel that is not situated either at the level of the contours of an intervisibility zone or at the level of the contours or a forest zone, only the existing cue of highest priority is retained for the construction of the altimetric image, and **in that** at each pixel, the color of the altimetric image can be modulated by a shading cue (sha) representative of the relief of the terrain at said pixel.

8. Method of synthesizing an altimetric image according to Claim 7, **characterized in that** a smoothing operation is carried out for all the pixels belonging to the contours of the entire set of intervisibility zones and for all the pixels belonging to the contours of the entire set of forest zones.

## Patentansprüche

1. Verfahren zur Synthese eines Höhenbilds, das aus Pixeln besteht und in Farbe ein von einem Luftfahrzeug überflogenes Gelände darstellt, das mindestens einen normalen Antikollisionsmodus aufweist, bei dem die das Gelände darstellende Farbe in jedem Pixel mindestens zugleich von dem Höhenunterschied (dz) zwischen dem Luftfahrzeug und dem Gelände, der sich entweder durch eine Information über eine Gefahr der Kollision zwischen dem Luftfahrzeug und dem Gelände oder durch eine Näherungsinformation zwischen der Höhe des Luftfahrzeugs und der Höhe des Geländes äußert, und von einer eventuellen Information über das Vorhandensein mindestens einer Sichtkontaktzone zwischen dem Luftfahrzeug und einer gegebenen potentiellen Bedrohung abhängt, **dadurch gekennzeichnet, dass** die abnehmende Reihenfolge der Prioritäten zwischen Informationen folgendermaßen ist: zunächst die Kollisionsgefahrinformation, dann die Information über das Vorhandensein mindestens einer Sichtkontaktzone, anschließend die Näherungsinformation, dass in jedem Pixel, das sich nicht in Höhe der Umrisse einer Sichtkontaktzone befindet, nur die vorrangigste existierende Information für den Aufbau des Höhenbilds genommen wird, und dass in jedem Pixel die Farbe des Höhenbilds durch eine Schattierungsinformation ($\alpha$omb) moduliert werden kann, die für das Relief des Geländes im Pixel repräsentativ ist.

2. Verfahren zur Synthese eines Höhenbilds nach Anspruch 1, **dadurch gekennzeichnet, dass** die Kollisionsgefahrinformation und die Information über das Vorhandensein mindestens einer Sichtkontaktzone durch zwei voneinander unterschiedliche Farbtöne der gleichen Farbe dargestellt werden.

3. Verfahren zur Synthese eines Höhenbilds nach Anspruch 2, **dadurch gekennzeichnet, dass** die Kollisionsgefahrinformation durch einen eher lebhaften Farbton der Farbe dargestellt wird, und dass die Information über das Vorhandensein einer Sichtkontaktzone durch einen eher pastelligen Farbton der Farbe dargestellt wird.

4. Verfahren zur Synthese eines Höhenbilds nach einem der Ansprüche 2 bis 3, **dadurch gekennzeichnet, dass** die das Gelände darstellende Farbe ebenfalls von einer eventuellen Information über das Vorhandensein mindestens einer Reichweitenzone einer gegebenen potentiellen Bedrohung abhängt, dass die abnehmende Reihenfolge der Prioritäten dann folgendermaßen wird: zunächst die Kollisionsgefahrinformation, dann die Information über das Vorhandensein mindestens einer Sichtkontaktzone, anschließend die Information über das Vorhandensein mindestens einer Reichweitenzone, schließlich die Näherungsinformation.

**5.** Verfahren zur Synthese eines Höhenbilds nach Anspruch 4, **dadurch gekennzeichnet, dass** die Information über das Vorhandensein mindestens einer Reichweitenzone und die Information über das Vorhandensein mindestens einer Sichtkontaktzone durch den gleichen Farbton von zwei voneinander unterschiedlichen Farben dargestellt werden.

**6.** Verfahren zur Synthese eines Höhenbilds nach einem der vorhergehenden Ansprüche, **dadurch gekennzeichnet, dass** ein Glättungsvorgang für alle Pixel durchgeführt wird, die zu den Umrissen der Gesamtheit der Sichtkontaktzonen gehören.

**7.** Verfahren zur Synthese eines Höhenbilds nach einem der vorhergehenden Ansprüche, **dadurch gekennzeichnet, dass** das Verfahren mindestens einen normalen hypsometrischen Modus, in dem die das Gelände darstellende Farbe in jedem Pixel mindestens zugleich von der Höhe ($Z4$) des Geländes, die sich durch eine Höheninformation des Geländes äußert, von einer eventuellen Information über das Vorhandensein ($\alpha for$) einer Waldzone und von einer eventuellen Information über das Vorhandensein mindestens einer Sichtkontaktzone zwischen dem Luftfahrzeug und einer gegebenen potentiellen Bedrohung abhängt, **dadurch gekennzeichnet, dass** die abnehmende Reihenfolge der Prioritäten zwischen Informationen folgendermaßen ist: zunächst die Information über das Vorhandensein mindestens einer Sichtkontaktzone, dann die Information über das Vorhandensein ($\alpha for$) von Wald, anschließend die Höheninformation, dass in jedem Pixel, das sich weder in Höhe der Umrisse einer Sichtkontaktzone noch in Höhe der Umrisse einer Waldzone befindet, nur die vorrangigste existierende Information für den Aufbau des Höhenbilds genommen wird, und dass in jedem Pixel die Farbe des Höhenbilds durch eine Schattierungsinformation ($\alpha omb$) moduliert werden kann, die für das Relief des Geländes in dem Pixel repräsentativ ist.

**8.** Verfahren zur Synthese eines Höhenbilds nach Anspruch 7, **dadurch gekennzeichnet, dass** für alle Pixel, die zu den Umrissen der Gesamtheit der Sichtkontaktzonen gehören und für alle Pixel, die zu den Umrissen der Gesamtheit der Waldzonen gehören, ein Glättungsvorgang durchgeführt wird.

FIG.1

FIG.2

FIG.3

FIG.4

FIG.5

FIG.6

## EP 1 405 038 B1

### RÉFÉRENCES CITÉES DANS LA DESCRIPTION

**Documents brevets cités dans la description**

- FR 2773609